# EUROPEAN PATENT APPLICATION

(11) **EP 4 827 224 A1**
(43) Date of publication of application: **21.10.2026**
(21) Application number: 25783137.0
(22) Date of filing: 03.04.2025
(51) Int. Cl.: H04W 74/00, H04W 74/0833, H04B 17/318, H04W 24/08, H04W 72/0446, H04L 5/00, H04L 5/14, H04W 52/36

(54) **METHOD AND APPARATUS FOR RANDOM ACCESS PROCEDURE IN SBFD SUBBAND**

(30) Priority: 05.04.2024 KR 20240046836
(71) Applicant: Hyundai Motor Company, Seoul 06797 (KR); Kia Corporation, Seoul 06797 (KR)
(72) Inventor: LEE, Jeong Su, Hwaseong-si, Gyeonggi-do 18280 (KR); HONG, Ui Hyun, Hwaseong-si, Gyeonggi-do 18280 (KR); SUH, Young Kil, Hwaseong-si, Gyeonggi-do 18280 (KR); HAHN, Gene Back, Hwaseong-si, Gyeonggi-do 18280 (KR)
(74) Representative: Isarpatent
(86) International application number: PCT/KR2025/004405
(87) International publication number: WO 2025/211778

(57) **Abstract**

Disclosed are a method and an apparatus for a random access procedure in an SBFD subband. A method of a user equipment (UE) comprises the steps of: receiving random access channel (RACH) configuration information from a base station; identifying validity of one or more RACH occasions (ROs) indicated by the RACH configuration information; and transmitting, to the base station, a random access (RA) preamble on a valid RO belonging to an uplink (UL) subband from among the one or more ROs.

## Description

### [Technical Field]

The present disclosure relates to an enhanced communication technique, and more particularly, to a technique for a random access procedure in a subband full duplex (SBFD) subband.

### [Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both frequency range 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, a communication network may support a subband full-duplex (SBFD) operation. In a communication network supporting the SBFD operation, an uplink (UL) subband may be configured in a downlink (DL) duration. A UL subband configured in a DL duration may be used for a random access procedure. Some resources within the UL subband may not be available for the random access procedure. In the above-described situation, methods for efficiently performing the random access procedure using the UL subband may be required.

### [Disclosure]

### [Technical Problem]

The present disclosure is directed to providing a method and an apparatus for a random access procedure in an SBFD subband.

### [Technical Solution]

A method of a user equipment (UE), according to exemplary embodiments of the present disclosure for achieving the above-described objective, may comprise: receiving, from a base station, random access channel (RACH) configuration information; determining validity of one or more RACH occasions (ROs) indicated by the RACH configuration information; and transmitting a random access (RA) preamble to the base station in a valid RO belonging to an uplink (UL) subband among the one or more ROs.

The RACH configuration information may include legacy RACH configuration information and subband full duplex (SBFD) RACH configuration information, and the one or more ROs may be indicated by the SBFD RACH configuration information.

The SBFD RACH configuration information may be configured independently of the legacy RACH configuration information, and each of the SBFD RACH configuration information and the legacy RACH configuration information may include at least one of mapping information between a synchronization signal block (SSB) and an RO or mapping information between the RA preamble and the SSB.

An RO completely belonging to the UL subband among the one or more ROs may be determined as the valid RO, and an RO partially belonging to the UL subband among the one or more ROs may be determined as an invalid RO.

Based on a downlink (DL) resource existing during a preconfigured duration before an RO completely belonging to the UL subband among the one or more ROs, the RO may be determined as an invalid RO.

The method may further comprise: transmitting a message A (MsgA) physical uplink shared channel (PUSCH) to the base station in a time duration after the valid RO, wherein the RA preamble may be a MsgA preamble, and information on the time duration may be included in the RACH configuration information.

The valid RO and the time duration may belong to a same UL subband or different UL subbands.

A two-step RA procedure may be performed based on existence of a time duration in which MsgA PUSCH is transmittable after the valid RO, and a four-step RA procedure may be performed based on absence of a time duration in which MsgA PUSCH is transmittable after the valid RO.

The RACH configuration information may include at least one of information indicating whether a four-step RA procedure is supported in an SBFD resource or information indicating whether a two-step RA procedure is supported in the SBFD resource.

The method may further comprise: based on a failure of transmission of the RA preamble, retransmitting the RA preamble to the base station in a UL resource indicated by time division duplexing (TDD) dedicated configuration information received from the base station.

The RA preamble may be retransmitted using increased transmission power determined based on an SBFD power parameter.

The RACH configuration information may include an SBFD power parameter, transmission power of the RA preamble transmitted in the UL subband belonging to an SBFD resource may be determined based on the SBFD power parameter, and the SBFD power parameter may be configured independently of a non-SBFD (N-SBFD) power parameter used for determining transmission power of an RA preamble transmitted in an N-SBFD resource.

A UE according to exemplary embodiments of the present disclosure for achieving the above-described objective may comprise at least one processor, and the at least one processor may cause the UE to perform: receiving, from a base station, random access channel (RACH) configuration information; determining validity of one or more RACH occasions (ROs) indicated by the RACH configuration information; and transmitting a random access (RA) preamble to the base station in a valid RO belonging to an uplink (UL) subband among the one or more ROs.

The RACH configuration information may include legacy RACH configuration information and subband full duplex (SBFD) RACH configuration information, and the one or more ROs may be indicated by the SBFD RACH configuration information.

The SBFD RACH configuration information may be configured independently of the legacy RACH configuration information, and each of the SBFD RACH configuration information and the legacy RACH configuration information may include at least one of mapping information between a synchronization signal block (SSB) and an RO or mapping information between the RA preamble and the SSB.

An RO completely belonging to the UL subband among the one or more ROs may be determined as the valid RO, and an RO partially belonging to the UL subband among the one or more ROs may be determined as an invalid RO.

Based on a downlink (DL) resource existing during a preconfigured duration before an RO completely belonging to the UL subband among the one or more ROs, the RO may be determined as an invalid RO.

The at least one processor may further cause the UE to perform: transmitting a message A (MsgA) physical uplink shared channel (PUSCH) to the base station in a time duration after the valid RO, wherein the RA preamble may be a MsgA preamble, and information on the time duration may be included in the RACH configuration information.

The at least one processor may further cause the UE to perform: based on a failure of transmission of the RA preamble, retransmitting the RA preamble to the base station in a UL resource indicated by time division duplexing (TDD) dedicated configuration information received from the base station.

The RACH configuration information may include an SBFD power parameter, transmission power of the RA preamble transmitted in the UL subband belonging to an SBFD resource may be determined based on the SBFD power parameter, and the SBFD power parameter may be configured independently of a non-SBFD (N-SBFD) power parameter used for determining transmission power of an RA preamble transmitted in an N-SBFD resource.

### [Advantageous Effects]

According to the present disclosure, a terminal supporting SBFD can identify a valid random access channel (RACH) occasion (RO) in a UL subband and can transmit a random access (RA) preamble to a base station in the valid RO. The terminal can perform a two-step RA procedure in an SBFD resource. When transmission of the RA preamble in the UL subband fails, the terminal can retransmit the RA preamble in a next RO (e.g., a next valid RO). Power control for the RA procedure in the SBFD resource may be performed independently of power control for an RA procedure in a non-SBFD (N-SBFD) resource. Accordingly, the RA procedure in the UL subband can be efficiently performed, and performance of the communication system can be improved.

### [Description of Drawings]

FIG. 1 is a conceptual diagram illustrating exemplary embodiments of a communication system.
FIG. 2 is a block diagram illustrating exemplary embodiments of a communication node constituting a communication system.
FIG. 3 is a block diagram illustrating exemplary embodiments of communication nodes performing communication.
FIG. 4A is a block diagram illustrating exemplary embodiments of a transmission path.
FIG. 4B is a block diagram illustrating exemplary embodiments of a reception path.
FIG. 5 is a conceptual diagram illustrating exemplary embodiments of a system frame in a communication system.
FIG. 6 is a conceptual diagram illustrating exemplary embodiments of a subframe in a communication system.
FIG. 7 is a conceptual diagram illustrating exemplary embodiments of a slot in a communication system.
FIG. 8 is a conceptual diagram illustrating exemplary embodiments of a time-frequency resource in a communication system.
FIG. 9 is a conceptual diagram illustrating exemplary embodiments of RO configuration within a UL subband.
FIG. 10 is a conceptual diagram illustrating exemplary embodiments of RO configuration within a UL subband.
FIG. 11 is a conceptual diagram illustrating exemplary embodiments of RO configuration within a UL subband.
FIG. 12 is a sequence diagram illustrating exemplary embodiments of an RA procedure in a communication system supporting SBFD.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and defined in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

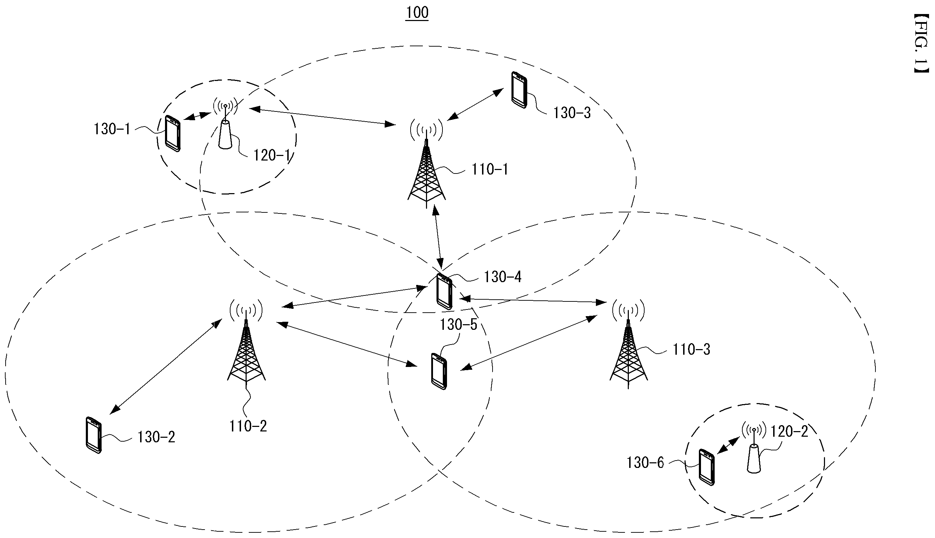

FIG. 1 is a conceptual diagram illustrating exemplary embodiments of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME). When the communication system 100 is a 5G communication system (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication nodes may have the following structure.

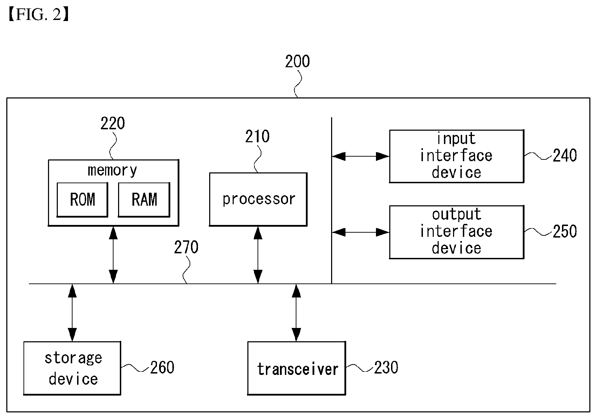

FIG. 2 is a block diagram illustrating exemplary embodiments of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a nonvolatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

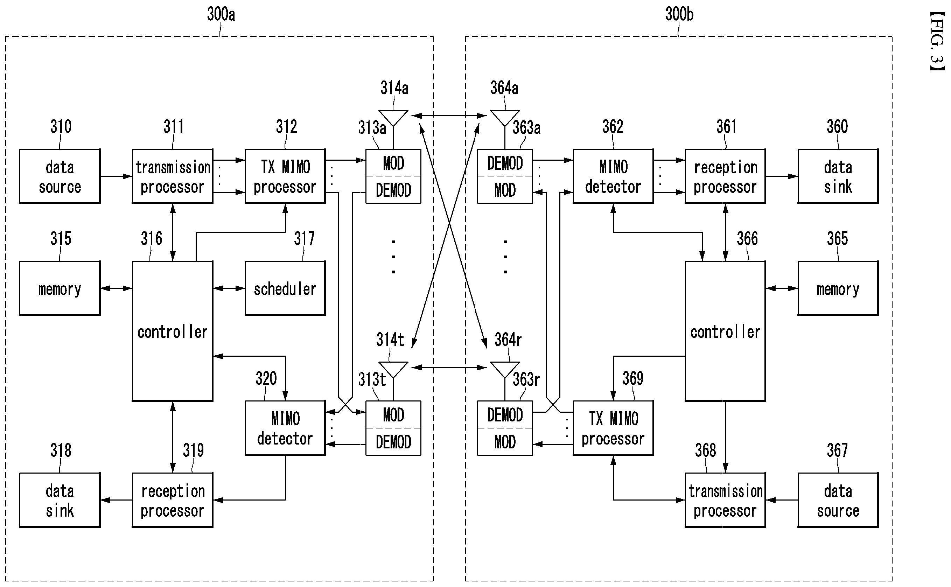

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating exemplary embodiments of communication nodes performing communications.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g., analog conversion operation, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g., analog conversion operation, amplification operation, filtering operation, up-conversion operation) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform MIMO detection operations on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

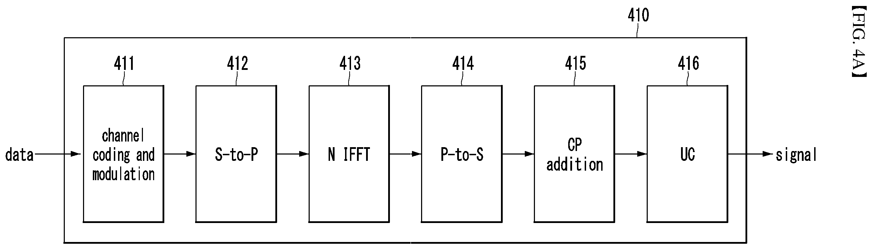

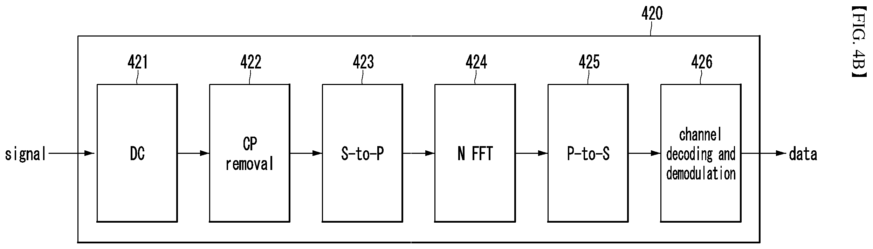

FIG. 4A is a block diagram illustrating exemplary embodiments of a transmission path, and FIG. 4B is a block diagram illustrating exemplary embodiments of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and an up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 411 may perform a coding operation (e.g., low-density parity check (LDPC) coding operation, polar coding operation, etc.) and a modulation operation (e.g., Quadrature Phase Shift Keying (QPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF). Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

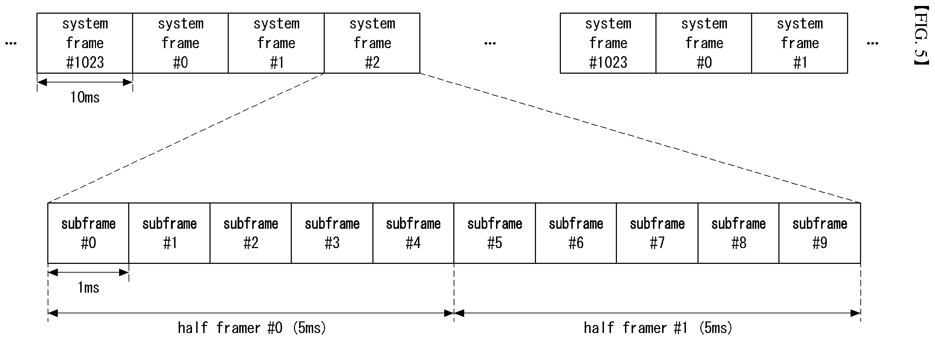

FIG. 5 is a conceptual diagram illustrating exemplary embodiments of a system frame in a communication system.

As shown in FIG. 5, time resources in the communication system may be divided on a frame basis. For example, system frames of the communication system may be configured continuously in the time domain. The length of the system frame may be 10 milliseconds (ms). A system frame number (SFN) may be set to one of #0 to #1023. In this case, 1024 system frames may be repeated in the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

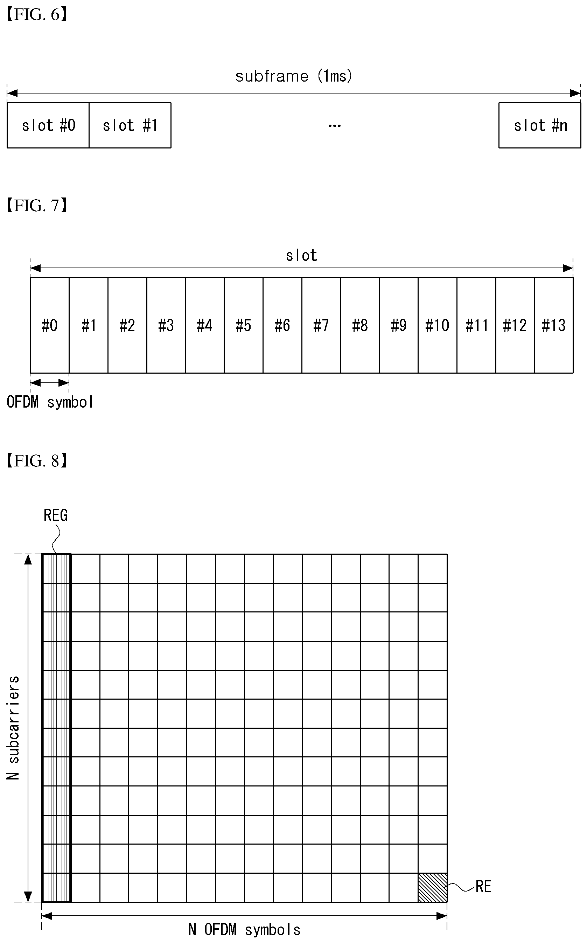

FIG. 6 is a conceptual diagram illustrating exemplary embodiments of a subframe in a communication system.

As shown in FIG. 6, one subframe may include n slots, and n may be a natural number. Accordingly, one subframe may consist of one or more slots.

FIG. 7 is a conceptual diagram illustrating exemplary embodiments of a slot in a communication system.

As shown in FIG. 7, one slot may include one or more symbols. For example, one slot shown in FIG. 7 may include 14 symbols. The length of a slot may vary according to the number of symbols included in a slot and the length of symbol. Alternatively, the length of a slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [µs] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., µ = 0), the length of a slot may be 1 ms. In this case, one system frame may include 10 slots. When a subcarrier spacing is 30 kHz (e.g., µ = 1), the length of a slot may be 0.5 ms. In this case, one system frame may include 20 slots.

When a subcarrier spacing is 60 kHz (e.g., µ = 2), the length of a slot may be 0.25 ms. In this case, one system frame may include 40 slots. When a subcarrier spacing is 120 kHz (e.g., µ = 3), the length of a slot may be 0.125 ms. In this case, one system frame may include 80 slots. When a subcarrier spacing is 240 kHz (e.g., µ = 4), the length of a slot may be 0.0625 ms. In this case, one system frame may include 160 slots.

The symbol may be configured as a downlink (DL) symbol, a flexible (FL) symbol, or an uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), Physical Uplink Shared Channel (PUSCH), Physical Sidelink Control Channel (PSCCH), and Physical Sidelink Shared Channel (PSSCH). In the present disclosure, a control channel may refer to PDCCH, PUCCH, or PSCCH, and a data channel may refer to PDSCH, PUSCH, or PSSCH.

FIG. 8 is a conceptual diagram illustrating exemplary embodiments of a time-frequency resource in a communication system.

As shown in FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG. 7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) for the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation and Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, a communication system (e.g., an NR communication system, a 5G communication system, or a 6G communication system) may support usage scenarios such as enhanced Mobile BroadBand (eMBB), Ultra Reliable Low Latency Communication (URLLC), and massive Machine Type Communication (mMTC). A communication system (e.g., a communication network) may support a subband full-duplex (SBFD) operation.

A communication system may support a time division duplexing (TDD) scheme. In a communication system supporting the TDD scheme (hereinafter, referred to as a "TDD communication system"), downlink (DL) symbol(s) and uplink (UL) symbol(s) may be configured in different time resources within one carrier. DL symbols and UL symbols may be associated with coverage and/or latency. In the TDD communication system, a base station may use resources more efficiently than in a frequency division duplexing (FDD) scheme in consideration of various use cases. A resource scheduling operation of a base station in the TDD communication system may be important. For an enhanced TDD operation, an SBFD operation (e.g., an SBFD scheme) may be supported. When the SBFD operation is supported in the TDD communication system, DL communication (e.g., a transmission and reception operation of a DL signal) and UL communication (e.g., a transmission and reception operation of a UL signal) may be simultaneously performed within the same time resource. For example, within the same time resource, some subbands may be DL subbands, and other subbands may be UL subbands and/or FL subbands. In the present disclosure, a DL signal may be interpreted as a DL signal, a DL channel, or "a DL signal and a DL channel" depending on context. In the present disclosure, a UL signal may be interpreted as a UL signal, a UL channel, or "a UL signal and a UL channel" depending on context.

A symbol to which the SBFD operation is applied may be referred to as an SBFD symbol. A symbol to which the SBFD operation is not applied may be referred to as a non-SBFD (N-SBFD) symbol. The N-SBFD symbol may be a DL symbol, a UL symbol, or an FL symbol. In the SBFD symbol, a terminal may perform DL communication and UL communication. In other words, the terminal may perform a full-duplex operation in the SBFD symbol. In the N-SBFD symbol, the terminal may perform one of DL communication and UL communication. In other words, the terminal may perform a half-duplex operation in the N-SBFD symbol. The SBFD symbol may be a symbol including a subband in which the SBFD operation is performed. A subband for SBFD may be referred to or interpreted as a UL subband. The UL subband may exist (e.g., be configured) in a symbol in which a synchronization signal block (SSB) is transmitted.

Resources for the SBFD operation (e.g., time resources and/or frequency resources) may be configured in a semi-static manner. In other words, a configuration for SBFD resources may be a semi-static configuration. "A configuration of SBFD resources being a semi-static configuration" may mean "SBFD resources being configured by semi-static signaling (e.g., system information or an RRC message)". In the present disclosure, SBFD resources may refer to time resources and/or frequency resources for the SBFD operation. A UL subband for SBFD may be an SBFD resource. Alternatively, SBFD resources may be configured in a dynamic manner. "A configuration of SBFD resources being a dynamic configuration" may mean "SBFD resources being configured by dynamic signaling (e.g., MAC CE, DCI, SCI) ".

SBFD resources (e.g., a UL subband and/or an SBFD symbol) may be configured within DL resources and/or flexible (FL) resources configured by TDD-UL-DL configuration common information (e.g., *TDD-UL-DL-ConfigCommon*). A transition point from an N-SBFD symbol to an SBFD symbol in the time domain may be limited to one. A transition point from an SBFD symbol to an N-SBFD symbol in the time domain may be limited to one. Regarding resource configuration of a subband for SBFD, it may be preferable for a terminal to recognize resource configuration information of the subband for SBFD in advance.

The TDD-UL-DL configuration common information may be used to configure, in the time domain, a pattern (e.g., *TDD-UL-DL-Pattern*) for DL resources and/or UL resources of the TDD communication system. A pattern for DL resources and/or UL resources may be referred to as a UL/DL pattern. The UL/DL pattern may be changed according to an environment of the communication system (e.g., the TDD communication system). Up to two UL/DL patterns may be configured for a terminal. The TDD-UL-DL configuration common information may be a cell-specific parameter (e.g., cell-specific configuration information). A base station may change a configuration (e.g., a transmission direction, a type) for symbol(s) on a per-terminal basis with reference to a specific slot within a preconfigured UL/DL pattern. A slot in which a symbol configuration (e.g., a symbol direction, a symbol type) is changeable may be a slot configured as an FL resource by the TDD-UL-DL configuration common information. A symbol direction (e.g., a symbol transmission direction) and/or a symbol type may be DL, UL, or FL. RRC signaling used to change a configuration of an FL slot (e.g., an FL resource) may be TDD-UL-DL configuration dedicated information (e.g., *TDD-UL-DL-ConfigDedicated*). Table 2 may be TDD-UL-DL configuration common information, and Table 3 and Table 4 may be TDD-UL-DL configuration dedicated information.

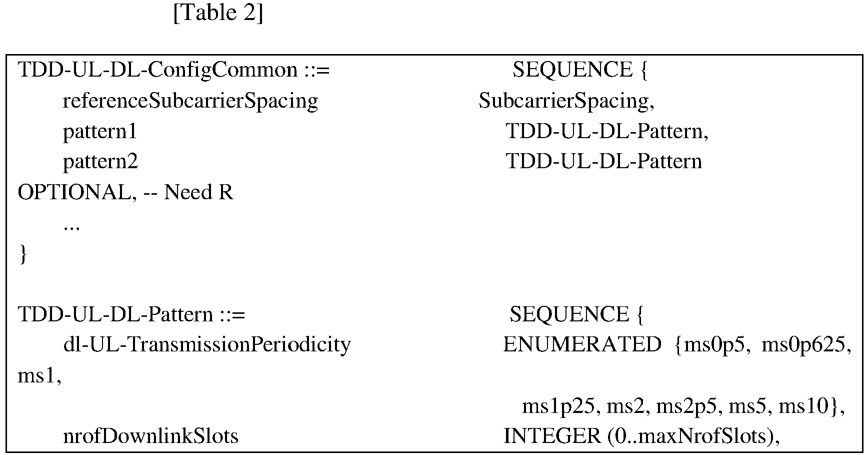

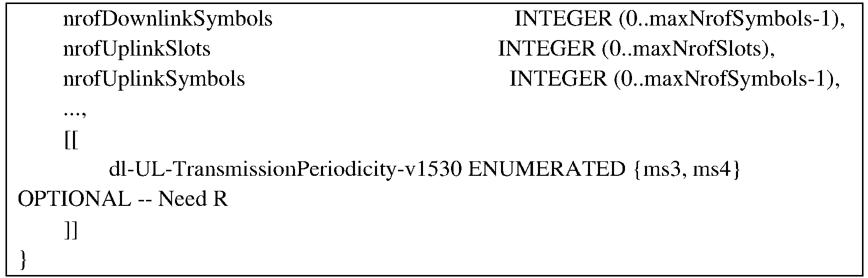

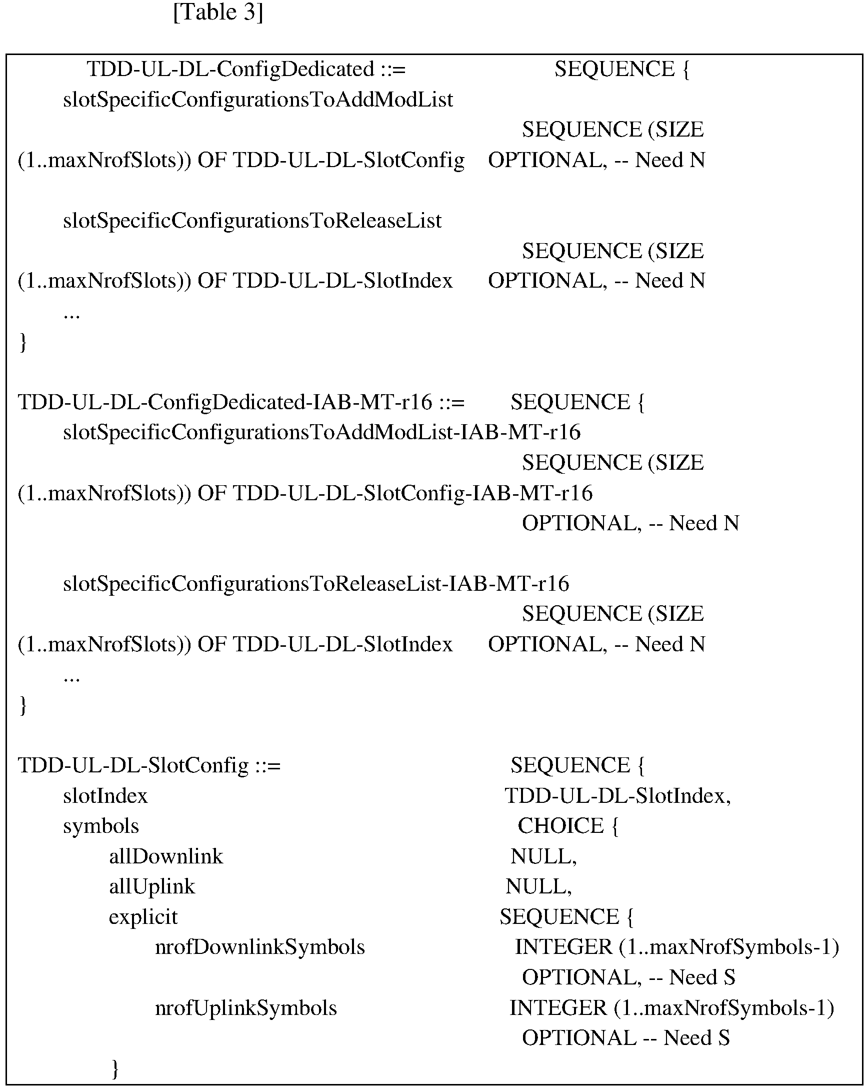

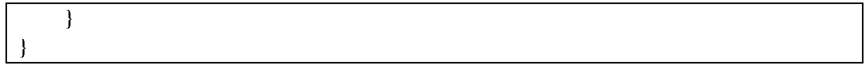

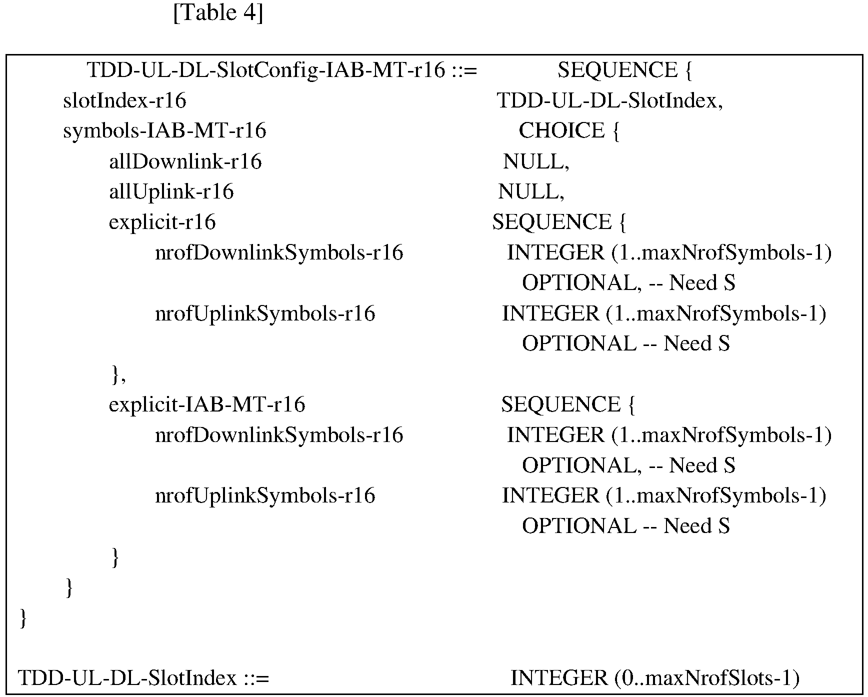

A UL/DL pattern configured by the TDD-UL-DL configuration common information may be repeated according to a specific periodicity (e.g., *dl-UL-TransmissionPeriodicity*)*.* A front region of a time duration to which the UL/DL pattern is applied may be configured as DL resources. A rear region of the time duration to which the UL/DL pattern is applied may be configured as UL resources. Resources that are not configured as DL resources or UL resources in the time duration to which the UL/DL pattern is applied may be configured as FL resources. The periodicity of the UL/DL pattern may vary depending on a reference numerology. For switching (e.g., transition) from DL resources (e.g., DL symbols/slots) to UL resources (e.g., UL symbols/slots), a guard time (e.g., a guard gap) may be required. Since a propagation delay of a DL signal causes interference to UL resources, the guard time may be required for switching from DL resources to UL resources. A separate guard time may not be required for switching from UL resources to DL resources. Since a UL signal is transmitted based on a timing advance command (TAC) indicated by the base station, a guard time for switching from UL resources to DL resources may not be required.

TDD-UL-DL configuration common information (e.g., *TDD-UL-DL-ConfigCommon*) may be referred to as "TDD common" or "TDD common information". TDD-UL-DL configuration dedicated information (e.g., *TDD-UL-DL-ConfigDedicated*) may be referred to as "TDD dedicated" or "TDD dedicated information". A UL subband may refer to a subband for SBFD. DL symbol(s) and/or DL slot(s) may be referred to as a DL region (or DL resource). UL symbol(s) and/or UL slot(s) may be referred to as a UL region (or UL resource). FL symbol(s) and/or FL slot(s) may be referred to as an FL region (or FL resource). A terminal supporting (e.g., being aware of) an SBFD operation may be referred to as an SBFD terminal or an SBFD UE. A terminal not supporting (e.g., being unaware of) an SBFD operation may be referred to as an N-SBFD terminal or an N-SBFD UE. An N-SBFD terminal may be a legacy terminal (e.g., a legacy UE). In the present disclosure, a terminal may be interpreted as an SBFD terminal and/or an N-SBFD terminal depending on context. Legacy configuration (e.g., legacy information, legacy configuration information) may be information for an N-SBFD terminal.

A random access procedure (e.g., random access channel (RACH) transmission, physical random access channel (PRACH) transmission) may be performed in a UL subband (e.g., an SBFD resource). The UL subband may belong to an SBFD resource. A UL subband may exist within a DL region and/or an FL region configured by TDD common. A UL subband may be configured within a DL region (e.g., a DL time resource). A terminal may perform PRACH transmission within the UL subband. In the present disclosure, PRACH transmission methods for an SBFD terminal will be described.

### • RACH configuration and validity rules for RACH occasions

A terminal may perform PRACH transmission (e.g., preamble transmission, random access (RA) preamble transmission) in a RACH occasion (RO). One RO or a plurality of ROs may be configured within one slot. A UL subband may be configured in a DL region and/or an FL region configured by TDD common and/or TDD dedicated, and one or more ROs may be configured within the UL subband. Configuration information for SBFD ROs may be configured (e.g., indicated) independently of configuration information for legacy ROs. Alternatively, SBFD ROs may be configured based on configuration information for legacy ROs. In other words, configuration information for SBFD ROs may not be separately indicated. Configuration information for SBFD ROs may be referred to as SBFD RO configuration or SBFD RO configuration information. Configuration information for legacy ROs may be referred to as legacy RO configuration or legacy RO configuration information.

An SBFD RO may refer to an RO configured within an SBFD resource (e.g., a UL subband). A legacy RO may refer to an RO configured within an N-SBFD resource (e.g., a UL resource). In the present disclosure, an RO may be interpreted as an SBFD RO and/or an N-SBFD RO depending on context. Due to a transition time of a terminal, a propagation delay of a signal, and the like, a problem in which not all SBFD ROs can be used may occur. In other words, a validity problem for an SBFD RO may occur.

### ■ Proposal #1

When SBFD RO configuration (e.g., SBFD RACH configuration) is not indicated to a terminal, the terminal may operate based on legacy RO configuration (e.g., legacy RACH configuration). The terminal may identify one or more ROs based on the legacy RO configuration. The terminal may attempt PRACH transmission using RO(s) located within a UL subband. Methods proposed in the present disclosure may be applied when SBFD RO configuration is indicated to a terminal (e.g., when the terminal operates based on SBFD RO configuration) and/or when SBFD RO configuration is not indicated to a terminal (e.g., when the terminal operates based on legacy RO configuration).

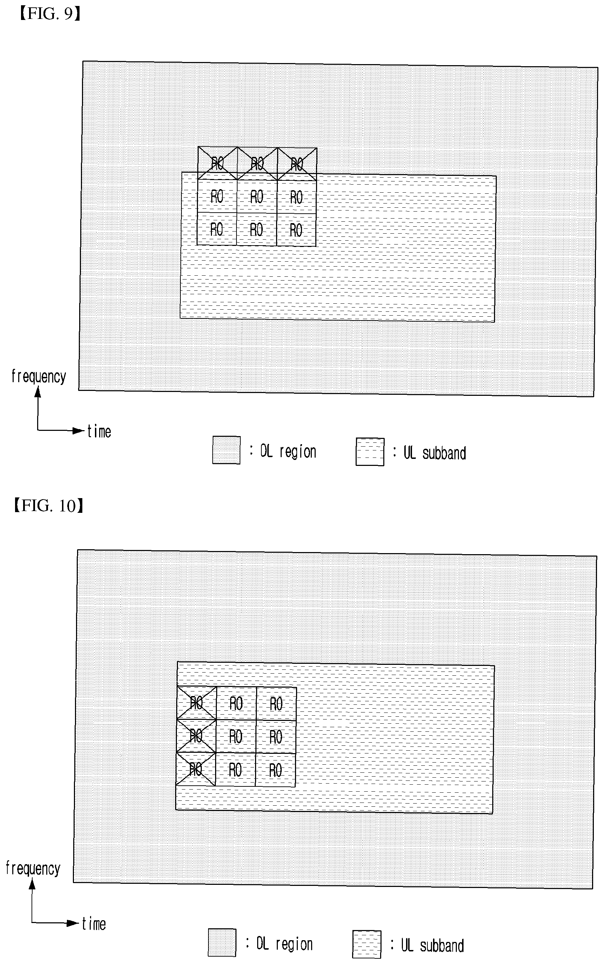

FIG. 9 is a conceptual diagram illustrating exemplary embodiments of RO configuration within a UL subband.

Referring to FIG. 9, some ROs may be configured across a UL subband and a DL resource. In this case, a terminal may not perform PRACH transmission in an RO configured across the UL subband and the DL resource. An RO may be configured across a UL subband and an FL resource. In this case, a terminal may not perform PRACH transmission in the RO configured across the UL subband and the FL resource. Alternatively, a terminal may not perform PRACH transmission in an RO configured across a UL subband and a DL resource, but the terminal may perform PRACH transmission in an RO configured across a UL subband and an FL resource. Some resources in the DL region of FIG. 9 may be FL resources.

A terminal may determine an RO completely belonging to a UL subband as a valid RO and may determine an RO partially belonging to a UL subband as an invalid RO. The terminal may determine validity for an SBFD RO and may transmit a PRACH preamble in a valid SBFD RO. When a signal (e.g., an SSB, a reference signal, CSI-RS) associated with an invalid RO has the best reference signal received power (RSRP), the terminal may be expected to perform PRACH transmission in an RO (e.g., a valid RO) associated with a signal having a quality lower than the best RSRP or having a second-best quality.

Until a valid RO is selected, the terminal may continuously perform an operation of selecting a valid RO associated with a signal having a next-best RSRP (e.g., a second-best RSRP). Alternatively, the terminal may perform an operation of selecting a valid RO associated with a signal having a next RSRP (e.g., a second-best RSRP) a preconfigured number of times. Alternatively, the terminal may perform an operation of selecting a valid RO associated with a signal having an RSRP equal to or greater than a quality threshold (e.g., an RSRP threshold). The quality threshold may be configured by a base station for the terminal. The quality threshold may be included in RACH configuration information.

FIG. 10 is a conceptual diagram illustrating exemplary embodiments of RO configuration within a UL subband.

As shown in FIG. 10, all ROs may be configured within a UL subband, and the ROs may be configured in a front region of the UL subband in the time domain. Some resources in a DL region of FIG. 10 may be FL resources. When a DL resource (e.g., a DL region, a DL symbol, a DL slot) exists during a preconfigured duration before an RO (e.g., an SBFD RO) configured within the UL subband, the terminal may not expect PRACH transmission in the RO. In other words, the terminal may determine the RO as an invalid RO and may not perform PRACH transmission in the invalid RO. Due to a transition time from DL communication to UL communication and/or a propagation delay of DL communication, PRACH transmission in an RO configured within the UL subband may be impossible. In other words, due to the transition time from DL communication to UL communication and/or the propagation delay of DL communication, invalid RO(s) may exist among SBFD ROs.

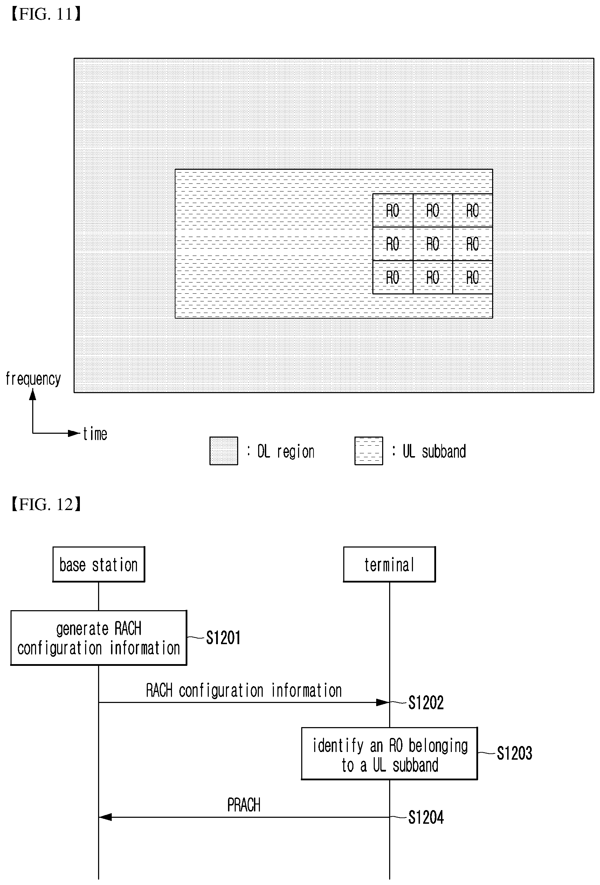

FIG. 11 is a conceptual diagram illustrating exemplary embodiments of RO configuration within a UL subband.

As shown in FIG. 11, all ROs may be configured within a UL subband, and the ROs may be configured in a rear region of the UL subband in the time domain. Some resources in the DL region of FIG. 11 may be FL resources. Unlike the exemplary embodiment shown in FIG. 10, in the exemplary embodiment of FIG. 11, invalid RO(s) due to a transition time from DL communication to UL communication and/or a propagation delay of DL communication may not occur. PRACH transmission may be possible in all ROs configured within the UL subband.

### ■ Proposal #2

A base station may generate SBFD RACH configuration information and may transmit the SBFD RACH configuration information to a terminal through signaling (e.g., system information, RRC message, RRC configuration). The terminal may receive the SBFD RACH configuration information through the signaling from the base station. The SBFD RACH configuration information may include SBFD RO configuration information. The SBFD RACH configuration information may be configured independently of legacy RACH configuration information. The base station may transmit the SBFD RACH configuration information together with legacy RACH configuration information to the terminal through signaling. In other words, the base station may transmit RACH configuration information including legacy RACH configuration information and SBFD RACH configuration information to the terminal through signaling. The terminal may receive the legacy RACH configuration information and the SBFD RACH configuration information together through the signaling from the base station. The terminal may identify RO(s) configured in an SBFD resource (e.g., a UL subband) based on the SBFD RACH configuration information. The terminal may identify RO(s) configured in an N-SBFD resource based on the legacy RACH configuration information.

Legacy RACH configuration information and SBFD RACH configuration information may each include mapping information between SSBs and ROs and/or mapping information between preambles (e.g., RA preambles) and SSBs. Alternatively, the SBFD RACH configuration information may not include mapping information between SSBs and ROs and/or mapping information between preambles and SSBs, and the terminal may identify RO(s) configured within the UL subband based on the mapping information between SSBs and ROs and/or the mapping information between preambles and SSBs included in the legacy RACH configuration information, and may identify preamble(s) associated with the RO(s).

The base station may configure ROs for the terminal such that all ROs belong to the UL subband. The base station may generate mapping information between preambles and SSBs considering RO configuration within the UL subband. When SBFD RACH configuration is indicated to the terminal, the terminal may perform PRACH transmission in RO(s) indicated by the SBFD RACH configuration without determining validity of the ROs. Alternatively, regardless of indication of the SBFD RACH configuration, the terminal may determine validity of RO(s) indicated by the SBFD RACH configuration and/or the legacy RACH configuration and may perform PRACH transmission in valid RO(s).

### • Four-step RA procedure and two-step RA procedure

A four-step RA procedure and/or a two-step RA procedure may be supported in a communication system supporting SBFD. In other words, the four-step RA procedure and/or the two-step RA procedure may be performed using an SBFD resource (e.g., a UL subband). A terminal may transmit, to a base station through signaling, information indicating whether the terminal supports the four-step RA procedure in an SBFD resource and/or information indicating whether the terminal supports the two-step RA procedure in an SBFD resource. The information may be included in a UE capability report transmitted by the terminal to the base station. The base station may identify, based on the information received from the terminal, whether the terminal supports the four-step RA procedure and/or the two-step RA procedure in an SBFD resource.

The base station may transmit, to the terminal through signaling, information indicating whether the four-step RA procedure is supported in an SBFD resource and/or information indicating whether the two-step RA procedure is supported in an SBFD resource. The terminal may identify, based on signaling received from the base station, whether the four-step RA procedure and/or the two-step RA procedure is supported in an SBFD resource. The base station may transmit, to the terminal through signaling, configuration information for the four-step RA procedure and/or configuration information for the two-step RA procedure, and the configuration information may include legacy RACH configuration and/or SBFD RACH configuration. The terminal may receive the configuration information for the four-step RA procedure and/or the configuration information for the two-step RA procedure through the signaling from the base station.

When only the four-step RA procedure is supported in an SBFD resource, the terminal may perform the four-step RA procedure in the SBFD resource. When only the two-step RA procedure is supported in an SBFD resource, the terminal may perform the two-step RA procedure in the SBFD resource. When both the four-step RA procedure and the two-step RA procedure are supported in an SBFD resource, the terminal may select one RA procedure from among the four-step RA procedure and the two-step RA procedure and may perform the selected RA procedure in the SBFD resource.

### ■ Proposal #3

A two-step RA procedure may be supported in an SBFD resource. A terminal may transmit an RA preamble (e.g., a message A (MsgA) preamble) to a base station in an RO within a UL subband and may transmit MsgA PUSCH to the base station in a time duration after the RO. A time duration for MsgA PUSCH transmission may exist within the UL subband. Alternatively, the time duration for MsgA PUSCH transmission may be an N-SBFD resource. The N-SBFD resource may be indicated by TDD common configuration and/or TDD dedicated configuration. The time duration for MsgA PUSCH transmission may be defined in technical specifications. Alternatively, a base station may transmit information on the time duration for MsgA PUSCH transmission to the terminal through signaling. The information on the time duration for MsgA PUSCH transmission may be included in SBFD RACH configuration information. The terminal may receive the information on the time duration for MsgA PUSCH transmission through the signaling from the base station.

The time duration for MsgA PUSCH transmission may be referred to as a MsgA PUSCH duration. The MsgA PUSCH duration may be configured with time resource(s) and/or frequency resource(s). The MsgA PUSCH duration may be configured with M symbols and/or N slots. Each of M and N may be a natural number. A value of each of M and N may be indicated to the terminal by signaling from the base station. When a MsgA PUSCH duration (e.g., a valid MsgA PUSCH duration) exists after an RO in which a MsgA preamble is transmitted, the terminal may perform a two-step RA procedure. The MsgA PUSCH duration may be a minimum time required for MsgA PUSCH transmission.

The terminal may selectively perform a four-step RA procedure or a two-step RA procedure based on an RSRP threshold. The terminal may selectively perform the four-step RA procedure or the two-step RA procedure based on configuration of an RO of the terminal (e.g., a location and/or existence of the RO) and/or configuration of a MsgA PUSCH duration (e.g., a location and/or existence of the MsgA PUSCH duration). When an RSRP of a signal received from the base station satisfies an RSRP threshold and a MsgA PUSCH duration exists, the terminal may perform (e.g., attempt) the two-step RA procedure. Alternatively, when a MsgA PUSCH duration exists regardless of whether an RSRP of a signal received from the base station satisfies an RSRP threshold, the terminal may perform (e.g., attempt) the two-step RA procedure.

The existence of a MsgA PUSCH duration may mean the existence of a MsgA PUSCH duration associated with an RO (e.g., a valid RO) within a UL subband. The RO and the MsgA PUSCH duration may exist within the same UL subband. When the RO and the MsgA PUSCH duration are configured in different UL subbands, the MsgA PUSCH duration may be regarded as an invalid duration. In this case, the terminal may not perform the two-step RA procedure. Alternatively, each of the RO and the MsgA PUSCH duration configured within different UL subbands may be regarded as a valid RO and a valid duration. In this case, the terminal may transmit a MsgA preamble in the RO configured in a first UL subband and may transmit MsgA PUSCH in the MsgA PUSCH duration configured in a second UL subband. The second UL subband may be located after the first UL subband in the time domain.

When an RSRP of a signal received from the base station satisfies an RSRP threshold but a MsgA PUSCH duration does not exist, the terminal may perform the four-step RA procedure instead of the two-step RA procedure. In other words, the two-step RA procedure may not be performed. Alternatively, when a MsgA PUSCH duration does not exist regardless of whether an RSRP of a signal received from the base station satisfies an RSRP threshold, the terminal may perform the four-step RA procedure instead of the two-step RA procedure. The absence of a MsgA PUSCH duration may mean that a MsgA PUSCH duration is not configured within a UL subband or that a MsgA PUSCH duration configured within a UL subband is an invalid duration.

### ■ Proposal #4

A terminal may perform an RA procedure in a UL subband based on legacy RACH configuration information. RO(s) within the UL subband may be configured based on the legacy RACH configuration information, and preamble transmission (e.g., transmission of a PRACH preamble) in the RO(s) configured within the UL subband may be performed based on the legacy RACH configuration information.

Some parameters for RO configuration and/or preamble transmission within the UL subband may be separately defined. For example, some parameters for RO configuration and/or preamble transmission within the UL subband may be included in SBFD configuration information (e.g., SBFD RACH configuration information). A base station may transmit the SBFD configuration information to the terminal through signaling. The terminal may receive the SBFD configuration information through the signaling from the base station and may identify some parameters for RO configuration and/or preamble transmission within the UL subband based on the SBFD configuration information. The terminal may update some parameters in the legacy RACH configuration information with parameters indicated by the SBFD configuration information (e.g., some parameters for RO configuration and/or preamble transmission within the UL subband) and may perform an RA procedure in the UL subband based on the updated parameters.

### • Repeated PRACH transmission

A UL subband may be configured within a DL region, and FL resources may exist after the UL subband. A terminal may perform repeated PRACH transmission (e.g., repeated transmission of a PRACH preamble, repeated transmission of MsgA) using the UL subband and FL resources. When repeated PRACH transmission is performed, transmission coverage of PRACH may increase. In other words, the transmission coverage of PRACH may be improved. An FL resource may be changed to a UL resource by TDD dedicated configuration. In other words, the TDD dedicated configuration may indicate that the FL resource is to be changed to the UL resource. A terminal supporting an SBFD operation may perform repeated PRACH transmission based on Proposal #5 below.

### ■ Proposal #5

A base station may transmit TDD dedicated configuration (e.g., TDD dedicated configuration indicating that an FL resource is to be changed to a UL resource) and PRACH repetition configuration information to a terminal through signaling. The terminal may receive the TDD dedicated configuration and the PRACH repetition configuration information through the signaling from the base station. The PRACH repetition configuration information may be included in RACH configuration information. The PRACH repetition configuration information may include information indicating whether repeated PRACH transmission is possible and/or information on the number of repeated PRACH transmissions. The terminal may identify UL resource(s) indicated by the TDD dedicated configuration, and the PRACH repetition configuration information may be applied to the identified UL resource(s). The UL resource(s) indicated by the TDD dedicated configuration may be SBFD resource(s) and/or N-SBFD resource(s). The terminal may perform PRACH transmission in the UL subband and may perform repeated PRACH transmission in UL resource(s) after the UL subband (e.g., UL resource(s) indicated by the TDD dedicated configuration). When transmission of an RA preamble fails (e.g., when a response message for the RA preamble is not received within a preconfigured time), the terminal may perform repeated PRACH transmission.

### • Power control

Power control for an RA procedure based on SBFD RACH configuration may differ from power control for an RA procedure based on legacy RACH configuration. Considering a validity rule (e.g., a rule for determining RO validity) and/or repeated PRACH transmission, power control in an RA procedure based on SBFD RACH configuration may vary.

### ■ Proposal #6

A terminal may perform PRACH transmission in an RO associated with a signal (e.g., an SSB, a reference signal, CSI-RS) having second-best quality (e.g., second-best RSRP) based on a validity rule (e.g., a rule for determining RO validity). In the above-described situation, since a transmission beam (e.g., a transmission beam of a base station) of the signal (e.g., the SSB, the reference signal, the CSI-RS) associated with the PRACH transmission does not have the best performance, the base station may not receive (e.g., detect) the PRACH transmission transmitted from the terminal. In other words, since the base station performs a reception operation (e.g., a detection operation) for the PRACH transmission using a reception beam corresponding to the transmission beam that does not have the best performance (e.g., has low performance), reception (e.g., detection) of the PRACH transmission at the base station may fail.

In order to solve the above-described problem, the base station may configure power parameter(s) for an SBFD terminal (e.g., p0, a ramping step size, and the like) and may transmit the power parameter(s) to the terminal through signaling. The terminal may receive the power parameter(s) for the SBFD terminal through the signaling from the base station. The power parameter(s) for the SBFD terminal may be referred to as SBFD power parameter(s). The SBFD power parameter(s) may be configured independently of power parameter(s) for an N-SBFD terminal. The power parameter(s) for an N-SBFD terminal may be referred to as N-SBFD power parameter(s). The SBFD power parameter(s) may be included in legacy RACH configuration information and/or SBFD RACH configuration information. The terminal may determine transmission power of an RA preamble (e.g., PRACH transmission) based on the SBFD power parameter(s) and may transmit the RA preamble to the base station using the determined transmission power. The transmission power determined based on the SBFD power parameter(s) may be greater than a transmission power determined based on the N-SBFD power parameter(s). In other words, transmission power of an RA preamble transmitted in an SBFD resource may be greater than transmission power of an RA preamble transmitted in an N-SBFD resource.

A terminal may be unable to transmit a PRACH preamble in an RO (e.g., an SBFD RO) due to configuration of a base station and/or physical constraints. The terminal may use a value corresponding to "ramping counter + 1" in order to determine transmission power of the PRACH preamble in a next RO (e.g., a next SBFD RO). The terminal may determine transmission power using the value corresponding to "ramping counter + 1" and may transmit the PRACH preamble using the transmission power in the next RO (e.g., the next SBFD RO). In other words, the terminal may retransmit the PRACH preamble using increased transmission power. The increased transmission power for retransmission of the PRACH preamble may be determined based on the SBFD power parameter(s). Since the importance of PRACH transmission in a UL subband may be higher than that of PRACH transmission in a general UL region, power control for PRACH transmission in UL subbands may differ from power control for PRACH transmission in a general UL region. For example, PRACH transmission in a UL subband may be applied to a low-latency scenario.

FIG. 12 is a sequence diagram illustrating exemplary embodiments of an RA procedure in a communication system supporting SBFD.

As shown in FIG. 12, a base station may generate RACH configuration information (S1201). The RACH configuration information may include at least one of legacy RACH configuration information or SBFD RACH configuration information. Based on Proposal #1 described above, the RACH configuration information may include only the legacy RACH configuration information. Based on Proposal #2 described above, the RACH configuration information may include the legacy RACH configuration information and the SBFD RACH configuration information. Based on Proposal #3 and/or Proposal #4 described above, the RACH configuration information may include configuration information for a two-step RA procedure and/or configuration information for a four-step RA procedure. Based on Proposal #5 described above, the RACH configuration information may include PRACH repetition configuration information (e.g., configuration information for repeated PRACH transmission). Based on Proposal #6 described above, the RACH configuration information may include power parameter(s) (e.g., SBFD power parameter(s)).

The RACH configuration information may be generated based on at least one of Proposal #1 to Proposal #6. The base station may transmit the RACH configuration information to the terminal through signaling (e.g., system information, RRC message, MAC CE, and/or DCI) (S1202). The terminal may receive the RACH configuration information through the signaling from the base station (S1202). The terminal may identify information included in the RACH configuration information.

The terminal may identify (e.g., determine) an RO (e.g., a valid RO) belonging to a UL subband based on the RACH configuration information (S1203). In step S1203, the terminal may selectively perform a validity determination procedure for the RO. For example, when SBFD RACH configuration information is received from the base station, the terminal may identify an SBFD RO indicated by the SBFD RACH configuration information without performing the validity determination procedure for the RO. When SBFD RACH configuration information is not received from the base station (e.g., when SBFD RACH configuration is not indicated to the terminal), the terminal may determine validity of RO(s) indicated by legacy RACH configuration information. Alternatively, regardless of whether SBFD RACH configuration information is received, the terminal may determine validity of RO(s) indicated by SBFD RACH configuration information and/or legacy RACH configuration information. The terminal may determine validity of the RO(s) based on the method(s) according to Proposal #1 and/or Proposal #2 described above.

The terminal may transmit a PRACH preamble to the base station in an SBFD RO (e.g., a valid RO) (S1204). Based on Proposal #3 and/or Proposal #4 described above, the terminal may transmit, to the base station, a PRACH preamble according to a four-step RA procedure or MsgA (e.g., a MsgA preamble and MsgA PUSCH) according to a two-step RA procedure. When repeated PRACH transmission is required, the terminal may perform repeated PRACH transmission based on Proposal #5 described above. The terminal may determine transmission power using power parameter(s) according to Proposal #6 described above and may perform PRACH transmission using the transmission power. The base station may receive the PRACH transmission from the terminal by performing monitoring on SBFD RO(s) (S1204). When the PRACH transmission is received from the terminal, the base station may perform subsequent operations of the four-step RA procedure or the two-step RA procedure with the terminal.

In the present disclosure, a terminal may transmit, to a base station, information indicating whether the function(s) proposed in the present disclosure are supported. The information indicating whether the function(s) are supported may be included in a UE capability report. The base station may receive the UE capability report from the terminal and may perform signaling and/or an operation based on information included in the UE capability report (e.g., information indicating whether the function(s) are supported).

Configuration for a UL subband (e.g., SBFD configuration) may be transmitted through signaling (e.g., RRC signaling). The SBFD configuration may be transmitted after transmission of TDD common configuration. The methods proposed in the present disclosure may be applied not only to a licensed band but also to an unlicensed band. The methods proposed in the present disclosure may be applied to sidelink and/or supplementary uplink (SUL). For example, the methods proposed in the present disclosure may be applied to determination of transmission power in sidelink and/or SUL. Each of the proposals of the present disclosure may be independently applied. Alternatively, a combination of the proposals of the present disclosure may be applied.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), the method comprising:
receiving, from a base station, random access channel (RACH) configuration information;
determining validity of one or more RACH occasions (ROs) indicated by the RACH configuration information; and
transmitting a random access (RA) preamble to the base station in a valid RO belonging to an uplink (UL) subband among the one or more ROs.

2. The method of claim 1, wherein the RACH configuration information includes legacy RACH configuration information and subband full duplex (SBFD) RACH configuration information, and the one or more ROs are indicated by the SBFD RACH configuration information.

3. The method of claim 2, wherein the SBFD RACH configuration information is configured independently of the legacy RACH configuration information, and each of the SBFD RACH configuration information and the legacy RACH configuration information includes at least one of mapping information between a synchronization signal block (SSB) and an RO or mapping information between the RA preamble and the SSB.

4. The method of claim 1, wherein an RO completely belonging to the UL subband among the one or more ROs is determined as the valid RO, and an RO partially belonging to the UL subband among the one or more ROs is determined as an invalid RO.

5. The method of claim 1, wherein, based on a downlink (DL) resource existing during a preconfigured duration before an RO completely belonging to the UL subband among the one or more ROs, the RO is determined as an invalid RO.

6. The method of claim 1, further comprising: transmitting a message A (MsgA) physical uplink shared channel (PUSCH) to the base station in a time duration after the valid RO,
wherein the RA preamble is a MsgA preamble, and information on the time duration is included in the RACH configuration information.

7. The method of claim 6, wherein the valid RO and the time duration belong to a same UL subband or different UL subbands.

8. The method of claim 1, wherein a two-step RA procedure is performed based on existence of a time duration in which MsgA PUSCH is transmittable after the valid RO, and a four-step RA procedure is performed based on absence of a time duration in which MsgA PUSCH is transmittable after the valid RO.

9. The method of claim 1, wherein the RACH configuration information includes at least one of information indicating whether a four-step RA procedure is supported in an SBFD resource or information indicating whether a two-step RA procedure is supported in the SBFD resource.

10. The method of claim 1, further comprising: based on a failure of transmission of the RA preamble, retransmitting the RA preamble to the base station in a UL resource indicated by time division duplexing (TDD) dedicated configuration information received from the base station.

11. The method of claim 10, wherein the RA preamble is retransmitted using increased transmission power determined based on an SBFD power parameter.

12. The method of claim 1, wherein the RACH configuration information includes an SBFD power parameter, transmission power of the RA preamble transmitted in the UL subband belonging to an SBFD resource is determined based on the SBFD power parameter, and the SBFD power parameter is configured independently of a non-SBFD (N-SBFD) power parameter used for determining transmission power of an RA preamble transmitted in an N-SBFD resource.

13. A user equipment (UE) comprising at least one processor, wherein the at least one processor causes the UE to perform:
receiving, from a base station, random access channel (RACH) configuration information;
determining validity of one or more RACH occasions (ROs) indicated by the RACH configuration information; and
transmitting a random access (RA) preamble to the base station in a valid RO belonging to an uplink (UL) subband among the one or more ROs.

14. The UE of claim 13, wherein the RACH configuration information includes legacy RACH configuration information and subband full duplex (SBFD) RACH configuration information, and the one or more ROs are indicated by the SBFD RACH configuration information.

15. The UE of claim 14, wherein the SBFD RACH configuration information is configured independently of the legacy RACH configuration information, and each of the SBFD RACH configuration information and the legacy RACH configuration information includes at least one of mapping information between a synchronization signal block (SSB) and an RO or mapping information between the RA preamble and the SSB.

16. The UE of claim 13, wherein an RO completely belonging to the UL subband among the one or more ROs is determined as the valid RO, and an RO partially belonging to the UL subband among the one or more ROs is determined as an invalid RO.

17. The UE of claim 13, wherein, based on a downlink (DL) resource existing during a preconfigured duration before an RO completely belonging to the UL subband among the one or more ROs, the RO is determined as an invalid RO.

18. The UE of claim 13, wherein the at least one processor further causes the UE to perform: transmitting a message A (MsgA) physical uplink shared channel (PUSCH) to the base station in a time duration after the valid RO,
wherein the RA preamble is a MsgA preamble, and information on the time duration is included in the RACH configuration information.

19. The UE of claim 13, wherein the at least one processor further causes the UE to perform: based on a failure of transmission of the RA preamble, retransmitting the RA preamble to the base station in a UL resource indicated by time division duplexing (TDD) dedicated configuration information received from the base station.

20. The UE of claim 13, wherein the RACH configuration information includes an SBFD power parameter, transmission power of the RA preamble transmitted in the UL subband belonging to an SBFD resource is determined based on the SBFD power parameter, and the SBFD power parameter is configured independently of a non-SBFD (N-SBFD) power parameter used for determining transmission power of an RA preamble transmitted in an N-SBFD resource.
